# FASCICULE DE BREVET EUROPEEN

(11) **EP 2 103 238 B1**
(45) Date de publication et mention de la délivrance du brevet: **04.07.2012**
(21) Numéro de dépôt: 09356028.2
(22) Date de dépôt: 18.03.2009
(51) Int. Cl.: A47J 36/06, A47J 37/12

(54) **Couvercle d'appareil de cuisson comportant un hublot à double paroi**
Deckel eines Kochgeräts, der ein doppelwandiges Sichtfenster umfasst
Cooking device cover comprising a dual-wall window

(30) Priorité: 20.03.2008 FR 0801528
(43) Date de publication de la demande: 23.09.2009
(73) Titulaire: Seb S.A., 69130 Ecully (FR)
(72) Inventeur: Mathey, Olivier, 01540 Vonnas (FR)
(74) Mandataire: Kiehl, Hubert

(56) Documents cités:
- EP-A- 0 008 838
- EP-A- 0 146 473
- EP-A- 1 029 490
- US-A- 2 612 154

## Description

La présente invention concerne le domaine technique des appareils de cuisson comprenant une cuve prévue pour contenir un bain de cuisson. La présente invention concerne notamment, mais non exclusivement les friteuses électriques.

La présente invention concerne plus particulièrement le couvercle des appareils du type précité.

Il est connu du document EP 0 146 473 un couvercle d'appareil de cuisson comportant un hublot comprenant une paroi inférieure et une paroi supérieure, dans lequel la paroi supérieure est mobile par rapport à la paroi inférieure. Cette disposition permet de faciliter le nettoyage de l'intérieur du couvercle. Toutefois le flux de vapeur traversant le couvercle par une cartouche filtrante peut atteindre l'espace entre la paroi inférieure et la paroi supérieure. Un inconvénient de cette réalisation est l'échauffement de la paroi supérieure du hublot. Un autre inconvénient de cette réalisation est une mauvaise visibilité à travers le hublot.

Un objet de la présente invention est de proposer un couvercle avec hublot à double paroi, pour lequel l'échauffement de la paroi supérieure est limité.

Un autre objet de la présente invention est de proposer un couvercle avec hublot à double paroi, qui permette une bonne visibilité.

Un autre objet de la présente invention est de proposer un couvercle avec hublot à double paroi, qui soit facilement nettoyable.

Un autre objet de la présente invention est de proposer un couvercle avec hublot à double paroi, dont la construction soit simplifiée.

Ces objets sont atteints avec un couvercle d'appareil de cuisson, notamment friteuse électrique, comportant un hublot à double paroi comprenant une paroi inférieure et une paroi supérieure, la paroi supérieure appartenant à une partie supérieure du couvercle susceptible d'être déplacée par rapport à une partie inférieure du couvercle incluant la paroi inférieure, du fait que la partie supérieure du couvercle en place sur la partie inférieure du couvercle définit un espace confiné entre la paroi inférieure du hublot et la paroi supérieure du hublot. Ainsi la face supérieure de la paroi inférieure du hublot et la face inférieure de la paroi supérieure du hublot sont protégées des vapeurs émises au cours de la cuisson. Cette disposition permet également de limiter la température de la paroi supérieure du hublot. La partie supérieure du couvercle peut être retirée de la partie inférieure du couvercle en vue d'un nettoyage.

Avantageusement pour permettre une plus grande variété de cuissons, le couvercle comporte un échappement de vapeur traversant la partie inférieure.

Avantageusement alors pour simplifier la construction du couvercle l'échappement de vapeur traverse la partie supérieure.

Avantageusement alors pour améliorer le traitement des vapeurs de cuisson, l'échappement de vapeur présente un logement agencé entre la partie inférieure et la partie supérieure.

Selon une disposition avantageuse, une cartouche filtrante est agencée dans le logement.

Selon une construction avantageuse, la partie supérieure comporte un cadre entourant la paroi supérieure du hublot. Cette disposition permet de faciliter la manipulation de la partie supérieure du couvercle.

Avantageusement alors le cadre est surmoulé sur la paroi supérieure du hublot.

Avantageusement encore le cadre présente une nervure annulaire inférieure prévue pour prendre appui sur la partie inférieure.

Avantageusement alors la nervure annulaire inférieure est prévue pour prendre appui sur la paroi inférieure du hublot.

Avantageusement encore le cadre comporte des ouvertures d'échappement supérieures.

Selon une construction avantageuse la partie inférieure comprend un pare-vapeur assemblé avec un capot.

Avantageusement alors la paroi inférieure du hublot est maintenue entre le pare-vapeur et le capot.

Avantageusement encore le pare-vapeur comporte des ouvertures d'échappement inférieures.

Avantageusement encore pour mieux canaliser les vapeurs de cuisson issues de la cuve, la partie inférieure comporte un joint annulaire d'étanchéité.

Avantageusement alors le joint annulaire d'étanchéité est monté sous le pare-vapeur.

L'invention sera mieux comprise à l'étude d'un exemple de réalisation et de variantes, pris à titre nullement limitatif, illustrés dans les figures annexées 1 à 5, dans lesquelles :
- la figure 1 est une vue en perspective d'un appareil de cuisson comportant un couvercle selon l'invention,
- la figure 2 est une vue en éclaté montrant les différents éléments du couvercle illustré à la figure 1,
- la figure 3 est une vue en perspective éclatée montrant les éléments illustrés sur la figure 2 après l'assemblage du couvercle,
- la figure 4 est une vue en coupe du couvercle illustré sur les figures 1 à 3,
- la figure 5 est une vue en coupe illustrant deux variantes de réalisation du couvercle illustré sur les figures 1 à 4.

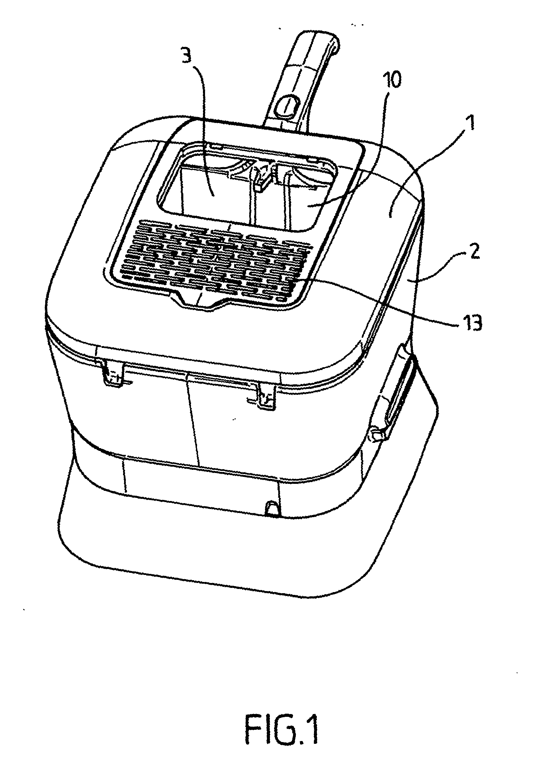

La figure 1 montre un appareil de cuisson selon l'invention, tel qu'une friteuse électrique, comprenant un couvercle 1 monté sur un boîtier 2 contenant une cuve 3.

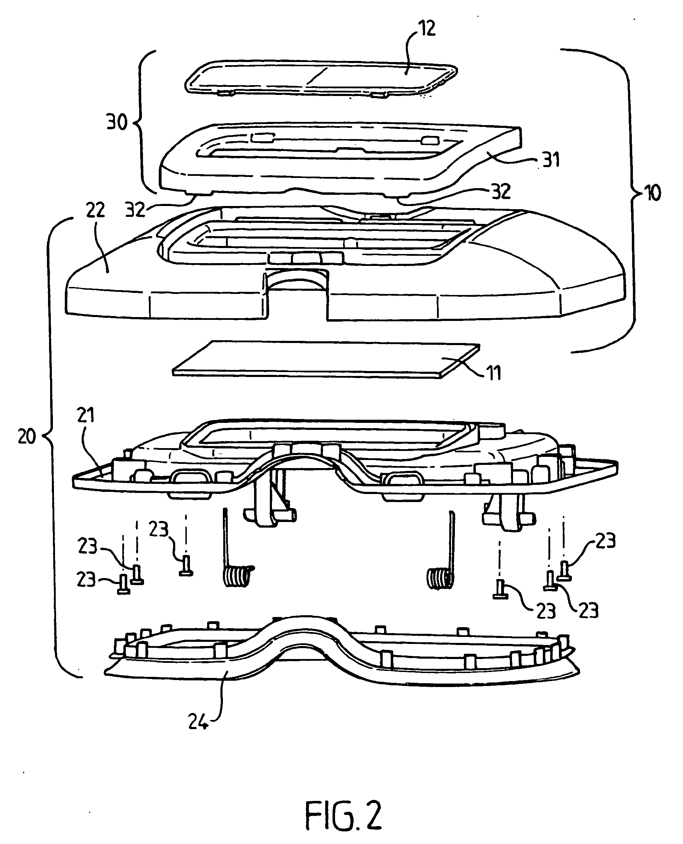

Tel que mieux visible sur la figure 2, le couvercle 1 comporte un hublot 10 à double paroi comprenant une paroi inférieure 11 et une paroi supérieure 12. La paroi inférieure 11 exposée aux projections de matière grasse issue de la cuve 3 est avantageusement réalisée en verre. La paroi inférieure 11 est de préférence plane. La paroi supérieure 12 agencée à l'extérieur de l'appareil est avantageusement réalisée en polycarbonate et peut présenter une forme galbée si désiré.

Le couvercle 1 comporte une partie inférieure 20 comprenant un pare-vapeur 21 assemblé avec un capot 22. La paroi inférieure 11 du hublot 10 est maintenue entre le pare-vapeur 21 et le capot 22. Ainsi la partie inférieure 20 du couvercle 1 inclut la paroi inférieure 11 du hublot 10. Selon la réalisation illustrée sur la figure 2, le pare-vapeur 21 est assemblé avec le capot 22 au moyen de vis 23. La partie inférieure 20 comporte un joint annulaire d'étanchéité 24, par exemple un joint à lèvres. Le joint annulaire d'étanchéité 24 est monté sous le pare-vapeur 21. Le pare-vapeur 21 présente une nervure annulaire inférieure 25 supportant la paroi inférieure 11 du hublot 10. Le capot 22 présente une nervure annulaire supérieure 26 venant en appui sur la paroi inférieure du hublot 10.

Le couvercle 1 comporte une partie supérieure 30 susceptible d'être déplacée par rapport à la partie inférieure 20. La paroi supérieure 12 du hublot 10 appartient à la partie supérieure 30 du couvercle 1. La partie supérieure 30 du couvercle 1 comporte un cadre 31 entourant la paroi supérieure 12 du hublot 10. Le cadre 31 est avantageusement surmoulé sur la paroi supérieure 12 du hublot 10. A titre de variante, le cadre 31 pourrait notamment être assemblé par clipsage avec la paroi supérieure 12 du hublot 10. Le cadre 31 présente des tenons 32 prévus pour être engagés dans des encoches du capot 22 ainsi qu'une languette élastique 33 prévue pour venir en prise avec une autre languette élastique 45 issue du capot 22. La languette élastique 33 est agencée en dessous d'une protubérance 34.

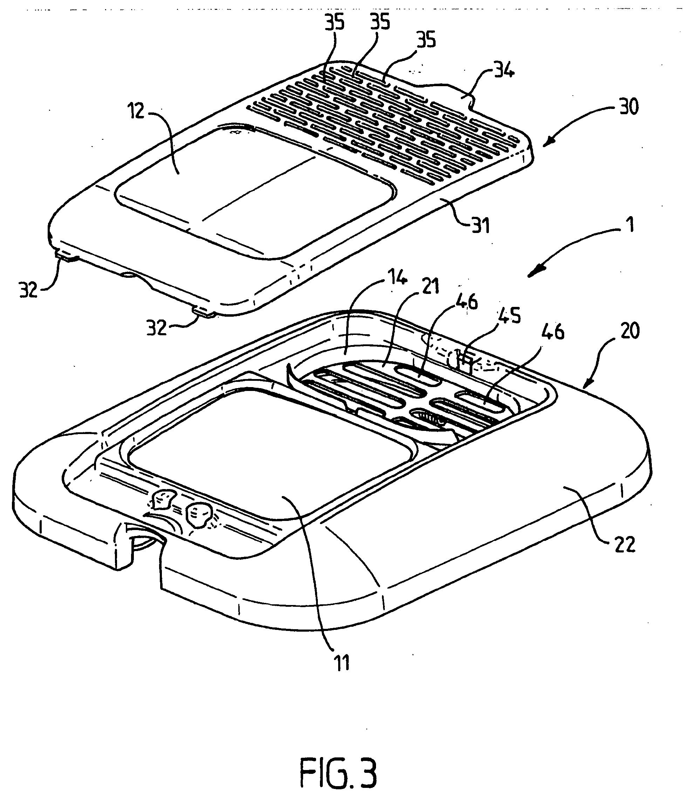

Le couvercle 1 comporte un échappement de vapeur 13, mieux visible sur les figures 1 et 3. L'échappement de vapeur 13 traverse la partie inférieure 20. A cet effet le pare-vapeur 21 comporte des ouvertures d'échappement inférieures 46. L'échappement de vapeur 13 traverse la partie supérieure 30. A cet effet le cadre 31 comporte des ouvertures d'échappement supérieures 35. L'échappement de vapeur 13 présente un logement 14 agencé entre la partie inférieure 20 et la partie supérieure 30. Avantageusement une cartouche filtrante 40 est agencée dans le logement 14. Ainsi la partie supérieure 30 constitue un bouchon de filtre.

Pour assurer une bonne visibilité à travers le hublot 10, la partie supérieure 30 du couvercle 1 en place sur la partie inférieure 20 du couvercle 1 définit un espace confiné 15 entre la paroi inférieure 11 du hublot 10 et la paroi supérieure 12 du hublot 10. A cet effet le cadre 31 présente une nervure annulaire inférieure 36 prévue pour prendre appui sur la partie inférieure 20 du couvercle 1. Plus particulièrement, la nervure annulaire inférieure 36 est prévue pour prendre appui sur la paroi inférieure 11 du hublot 10.

Le cadre 31 est réalisé en matériau prévu pour supporter les températures atteintes au niveau de l'échappement de vapeur 13 ainsi qu'au contact avec la paroi inférieure du hublot 10. Le cadre 31 est avantageusement réalisé en PBT. Le pare-vapeur 21 disposé au dessus de la cuve 3 peut également être avantageusement réalisé en PBT. Le capot 22 peut avantageusement être réalisé en polypropylène.

La présente invention fonctionne et s'utilise de la manière suivante. Pour accéder à la cartouche filtrante 40, l'utilisateur peut retirer la partie supérieure 30 de la partie inférieure 20 du couvercle 1 en exerçant un effort sur la protubérance 34, libérant la languette élastique 33 de l'autre languette élastique 45. Lorsque la partie supérieure 30 du couvercle 1 est en place sur la partie inférieure 20 du couvercle 1, les vapeurs de cuisson issues de la cuve 3 traversent le couvercle 1 par les ouvertures d'échappement inférieures 46, la cartouche filtrante 40 et les ouvertures d'échappement supérieures 35. La nervure annulaire inférieure 36 prenant appui sur la paroi inférieure 11 du hublot 10 permet d'éviter l'introduction de vapeurs de cuisson dans l'espace confiné 15. La visibilité à travers le hublot 10 est améliorée et la température de la paroi supérieure 12 du hublot 10 peut être réduite. L'amovibilité de la partie supérieure 30 par rapport à la partie inférieure 20 permet d'éviter l'apparition d'humidité résiduelle entre la paroi inférieure 11 et la paroi supérieure 12 du hublot 10.

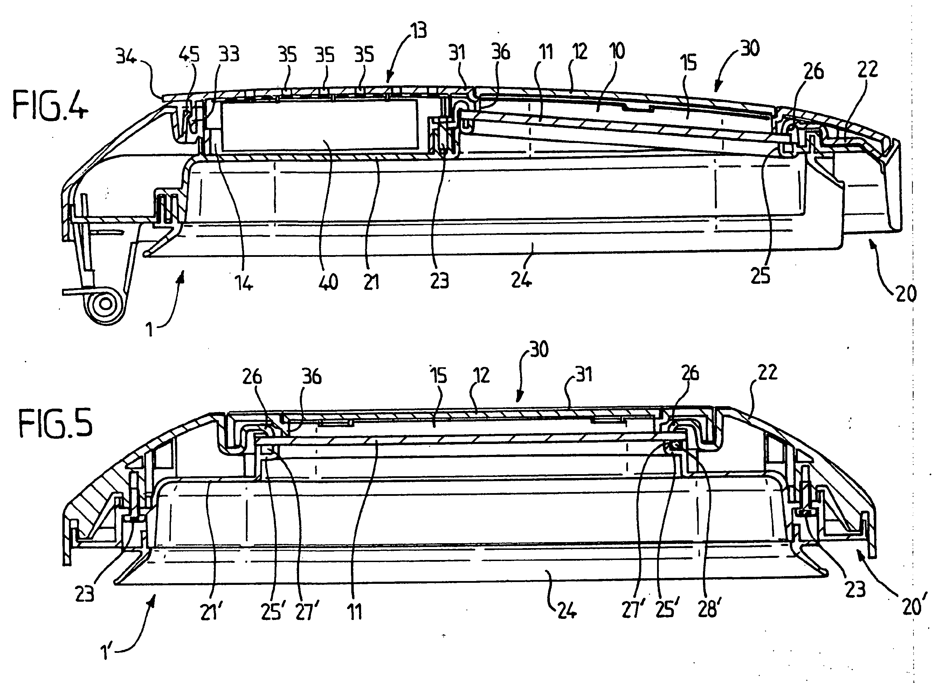

La figure 5 illustre une première variante de réalisation différant de la réalisation précédente en ce que le couvercle 1' comporte une partie inférieure 20' comprenant un pare-vapeur 21' présentant une nervure annulaire inférieure 25' munie d'une gorge 27'. Le double contact ainsi formé avec la paroi inférieure 11 du hublot 10 permet d'améliorer l'étanchéité aux vapeurs de cuisson.

A titre de deuxième variante complémentaire également illustrée sur la figure 5, un joint d'étanchéité 28' peut être disposé dans la gorge 27' pour venir en contact avec la paroi inférieure 11 du hublot 10.

A titre de variante, le couvercle 1 pourrait comporter deux parties supérieures indépendantes, l'une formant la paroi supérieure 12 du hublot 10, l'autre une paroi présentant les ouvertures d'échappement supérieures 35.

A titre de variante, le couvercle 1 pourrait être dépourvu de cartouche filtrante. La partie supérieure 30 ne présente alors pas nécessairement des ouvertures d'échappement supérieures.

La présente invention n'est nullement limitée à l'exemple de réalisation décrit et à ses variantes, mais englobe de nombreuses modifications dans le cadre des revendications.

## Revendications

1. Couvercle (1) d'appareil de cuisson, notamment friteuse électrique, comportant un hublot (10) à double paroi comprenant une paroi inférieure (11) et une paroi supérieure (12), la paroi supérieure (12) appartenant à une partie supérieure (30) du couvercle (1) susceptible d'être déplacée par rapport à une partie inférieure (20) du couvercle (1) incluant la paroi inférieure (11), **caractérisé en ce que** la partie supérieure (30) du couvercle (1) en place sur la partie inférieure (20) du couvercle (1) définit un espace confiné (15) entre la paroi inférieure (11) du hublot (10) et la paroi supérieure (12) du hublot (10).

2. Couvercle (1) d'appareil de cuisson selon la revendication 1, **caractérisé en ce qu'**il comporte un échappement de vapeur (13) traversant la partie inférieure (20).

3. Couvercle (1) d'appareil de cuisson selon le revendication 2, **caractérisé en ce que** l'échappement de vapeur (13) traverse la partie supérieure (30).

4. Couvercle (1) d'appareil de cuisson selon la revendication 3, **caractérisé en ce que** l'échappement de vapeur (13) présente un logement (14) agencé entre la partie inférieure (20) et la partie supérieure (30).

5. Couvercle (1) d'appareil de cuisson selon la revendication 4, **caractérisé en ce qu'**une cartouche filtrante (40) est agencée dans le logement (14).

6. Couvercle (1) d'appareil de cuisson selon l'une des revendications 1 à 5, **caractérisé en ce que** la partie supérieure (30) comporte un cadre (31) entourant la paroi supérieure (12) du hublot (10).

7. Couvercle (1) d'appareil de cuisson selon la revendication 6, **caractérisé en ce que** le cadre (31) est surmoulé sur la paroi supérieure (12) du hublot (10).

8. Couvercle (1) d'appareil de cuisson selon l'une des revendications 6 ou 7, **caractérisé en ce que** le cadre (31) présente une nervure annulaire inférieure (36) prévue pour prendre appui sur la partie inférieure (20).

9. Couvercle (1) d'appareil de cuisson selon la revendication 8, **caractérisé en ce que** la nervure annulaire inférieure (36) est prévue pour prendre appui sur la paroi inférieure (11) du hublot (10).

10. Couvercle (1) d'appareil de cuisson selon l'une des revendications 3 à 5 et selon l'une des revendications 6 à 9, **caractérisé en ce que** le cadre (31) comporte des ouvertures d'échappement supérieures (35).

11. Couvercle (1) d'appareil de cuisson selon l'une des revendications 1 à 10, **caractérisé en ce que** la partie inférieure (20) comprend un pare-vapeur (21) assemblé avec un capot (22).

12. Couvercle (1) d'appareil de cuisson selon la revendication 11, **caractérisé en ce que** la paroi inférieure (11) du hublot (10) est maintenue entre le pare-vapeur (21) et le capot (22).

13. Couvercle (1) d'appareil de cuisson selon l'une des revendications 2 à 5 et selon l'une des revendications 11 ou 12, **caractérisé en ce que** le pare-vapeur (21) comporte des ouvertures d'échappement inférieures (46).

14. Couvercle (1) d'appareil de cuisson selon l'une des revendications 1 à 13, **caractérisé en ce que** la partie inférieure (20) comporte un joint annulaire d'étanchéité (24).

15. Couvercle (1) d'appareil de cuisson selon l'une des revendications 11 à 13 et selon la revendication 14, **caractérisé en ce que** le joint annulaire d'étanchéité (24) est monté sous le pare-vapeur (21).

## Claims

1. A cover (1) for a cooking device, particularly an electric deep fryer, comprising a dual-wall window (10) with a lower wall (11) and an upper wall (12), the upper wall (12) belonging to an upper portion (30) of the cover (1) that can move relative to a lower portion (20) of the cover (1) including the lower wall (11), **characterised in that** the upper portion (30) of the cover (1) in place on the lower portion (20) of the cover (1) defines a confined space (15) between the lower wall (11) of the window (10) and the upper wall (12) of the window (10).

2. A cooking device cover (1) according to claim 1, **characterised in that** it comprises a steam exhaust (13) crossing the lower portion (20).

3. A cooking device cover (1) according to claim 2, **characterised in that** the steam exhaust (13) crosses the upper portion (30).

4. A cooking device cover (1) according to claim 3, **characterised in that** the steam exhaust (13) has a housing (14) arranged between the lower portion (20) and the upper portion (30).

5. A cooking device cover (1) according to claim 4, **characterised in that** a filter cartridge (40) is provided inside the housing (14).

6. A cooking device cover (1) according to one of claims 1 to 5, **characterised in that** the upper portion (30) contains a frame (31) surrounding the upper wall (12) of the window (10).

7. A cooking device cover (1) according to claim 6, **characterised in that** the frame (31) is overmoulded on the upper wall (12) of the window (10).

8. A cooking device cover (1) according to one of claims 6 or 7, **characterised in that** the frame (31) has a lower annular rib (36) adapted to bear against the lower portion (20).

9. A cooking device cover (1) according to claim 8, **characterised in that** the lower annular rib (36) is adapted to bear against the lower wall (11) of the window (10).

10. A cooking device cover (1) according to one of claims 3 to 5 and according to one of claims 6 to 9, **characterised in that** the frame (31) contains upper exhaust openings (35).

11. A cooking device cover (1) according to one of claims 1 to 10, **characterised in that** the lower portion (20) comprises a steam barrier (21) assembled with a cap (22).

12. A cooking device cover (1) according to claim 11, **characterised in that** the lower wall (11) of the window (10) is maintained between the steam barrier (21) and the cap (22).

13. A cooking device cover (1) according to one of claims 2 to 5 and according to one of claims 11 or 12, **characterised in that** the steam barrier (21) contains lower exhaust openings (46).

14. A cooking device cover (1) according to one of claims 1 to 13, **characterised in that** the lower portion (20) contains an annular seal (24).

15. A cooking device cover (1) according to one of claims 11 to 13 and according to claim 14, **characterised in that** the annular seal (24) is mounted under the steam barrier (21).

## Patentansprüche

1. Deckel (1) eines Kochgerätes, insbesondere einer elektrischen Fritteuse, umfassend ein doppelwandiges Sichtfenster (10) mit einer unteren Wand (11) und einer oberen Wand (12), wobei die obere Wand (12) einem oberen Teil (30) des Deckels (1) angehört, der in Bezug auf einen unteren Teil (20) des Deckels (1), der die untere Wand (11) umfasst, verlagert werden kann, **dadurch gekennzeichnet, dass** der obere Teil (30) des Deckels (1), der auf dem unteren Teil (20) des Deckels (1) angeordnet ist, einen Freiraum (15) definiert, der zwischen der unteren Wand (11) des Sichtfensters (10) und der oberen Wand (12) des Sichtfensters (10) begrenzt ist.

2. Deckel (1) eines Kochgerätes nach Anspruch 1, **dadurch gekennzeichnet, dass** er einen Dampfaustritt (13) umfasst, der den unteren Teil (20) passiert.

3. Deckel (1) eines Kochgerätes nach Anspruch 2, **dadurch gekennzeichnet, dass** der Dampfaustritt (13) den oberen Teil (30) passiert.

4. Deckel (1) eines Kochgerätes nach Anspruch 3, **dadurch gekennzeichnet, dass** der Dampfaustritt (13) eine Aufnahme (14) umfasst, die zwischen dem unteren Teil (20) und dem oberen Teil (30) angeordnet ist.

5. Deckel (1) eines Kochgerätes nach Anspruch 4, **dadurch gekennzeichnet, dass** eine Filterkartusche (40) in der Aufnahme (14) angeordnet ist.

6. Deckel (1) eines Kochgerätes nach einem der Ansprüche 1 bis 5, **dadurch gekennzeichnet, dass** der obere Teil (30) einen Rahmen (31) umfasst, der die obere Wand (12) des Sichtfensters (10) umgibt.

7. Deckel (1) eines Kochgerätes nach Anspruch 6, **dadurch gekennzeichnet, dass** der Rahmen (31) um die obere Wand (12) des Sichtfensters (10) herumgeformt ist.

8. Deckel (1) eines Kochgerätes nach einem der Ansprüche 6 oder 7, **dadurch gekennzeichnet, dass** der Rahmen (31) eine ringförmige untere Rippe (36) aufweist, die vorgesehen ist, um sich auf den unteren Teil (20) zu stützen.

9. Deckel (1) eines Kochgerätes nach Anspruch 8, **dadurch gekennzeichnet, dass** die ringförmige untere Rippe (36) vorgesehen ist, um sich auf die untere Wand (11) des Sichtfensters (10) zu stützen.

10. Deckel (1) eines Kochgerätes nach einem der Ansprüche 3 bis 5 und nach einem der Ansprüche 6 bis 9, **dadurch gekennzeichnet, dass** der Rahmen (31) obere Austrittsöffnungen (35) umfasst.

11. Deckel (1) eines Kochgerätes nach einem der Ansprüche 1 bis 10, **dadurch gekennzeichnet, dass** der untere Teil (20) eine Dampfsperre (21) umfasst, die mit einer Abdeckung (22) zusammengesetzt ist.

12. Deckel (1) eines Kochgerätes nach Anspruch 11, **dadurch gekennzeichnet, dass** die untere Wand (11) des Sichtfensters (10) zwischen der Dampfsperre (21) und der Abdeckung (22) festgehalten wird.

13. Deckel (1) eines Kochgerätes nach einem der Ansprüche 2 bis 5 und nach einem der Ansprüche 11 oder 12, **dadurch gekennzeichnet, dass** die Dampfsperre (21) untere Austrittsöffnungen (46) umfasst.

14. Deckel (1) eines Kochgerätes nach einem der Ansprüche 1 bis 13, **dadurch gekennzeichnet, dass** der untere Teil (20) eine ringförmige Dichtung (24) umfasst.

15. Deckel (1) eines Kochgerätes nach einem der Ansprüche 11 bis 13 und nach Anspruch 14, **dadurch gekennzeichnet, dass** die ringförmige Dichtung (24) unter der Dampfsperre (21) angebracht ist.
